# EUROPEAN PATENT APPLICATION

(11) **EP 4 845 263 A1**
(43) Date of publication of application: **25.11.2026**
(21) Application number: 25747899.0
(22) Date of filing: 24.01.2025
(51) Int. Cl.: H04W 72/0446

(54) **SIGNAL TRANSMISSION METHOD AND RELATED APPARATUS**

(30) Priority: 04.02.2024 CN 202410166115
(71) Applicant: Huawei Technologies Co., Ltd., Shenzhen, Guangdong 518129 (CN)
(72) Inventor: CHEN, Ying, Shenzhen, Guangdong 518129 (CN); TIE, Xiaolei, Shenzhen, Guangdong 518129 (CN); ZHANG, Jiayin, Shenzhen, Guangdong 518129 (CN)
(74) Representative: Huawei European IPR
(86) International application number: PCT/CN2025/075011
(87) International publication number: WO 2025/162331

(57) **Abstract**

A signal transmission method and a related apparatus are provided. The method includes: sending a detection signal, where the detection signal is used to detect a terminal having an access requirement; receiving a request message in a first beam direction and/or determining that a terminal switches to the first beam direction, where the request message is used to request scheduling of an SSB; and sending the SSB in the first beam direction. In this way, for an area having no access requirement, the SSB and a SIB corresponding to the SSB do not need to be sent, thereby saving resources, and reducing a waste of resources.

## Description

This application claims priority to Chinese Patent Application No. 202410166115.1, filed with the China National Intellectual Property Administration on February 4, 2024 and entitled "SIGNAL TRANSMISSION METHOD AND RELATED APPARATUS", which is incorporated herein by reference in its entirety.

### TECHNICAL FIELD

This application relates to the communication field, and in particular, to a signal transmission method and a related apparatus.

### BACKGROUND

Conventional terrestrial communication networks have limited coverage areas. For example, in areas such as seas, deserts, and forests where base stations cannot be deployed, terrestrial communication services may be unavailable. Non-terrestrial networks (non-terrestrial networks, NTNs) can provide wider coverage areas, and satellite base stations are less affected by natural disasters, thereby improving reliability of communication systems.

A synchronization signal/physical broadcast channel (synchronization signal/physical broadcast channel block, SS/PBCH) block (which may be referred to as a synchronization signal block (synchronization signal block, SSB) for short) includes a primary synchronization signal (primary synchronization signal, PSS), a secondary synchronization signal (secondary synchronization signal, SSS), and a physical broadcast channel (physical broadcast channel, PBCH). A master information block (master information block, MIB) is transmitted on the PBCH, the MIB is used to carry scheduling information of a system information block (system information block, SIB) 1 and the like, and the SIB1 may carry scheduling information of other types of SIBs.

Currently, in the NTN, a network device sends SSBs and SIBs corresponding to the SSBs in each beam direction for terminal access. However, generally, there is no access requirements in areas corresponding to some beams. This may cause a waste of resources.

### SUMMARY

This application provides a signal transmission method and a related apparatus, to reduce a waste of resources.

According to a first aspect, this application provides a signal transmission method. The method may be performed by a communication apparatus. The communication apparatus may be a network device, or may be a component (for example, a chip or a chip system) configured in the network device, or may be a logic module or software that can implement all or some functions of the network device. This is not limited in this application.

The method includes: sending a detection signal, where the detection signal is used to detect a terminal having an access requirement; receiving a request message in a first beam direction and/or determining that a terminal switches to the first beam direction, where the request message is used to request scheduling of an SSB; and sending the SSB in the first beam direction.

In this application, that the network device determines that a terminal switches to the first beam direction indicates that there is an access requirement in the first beam direction. In other words, the terminal in the first beam direction has a network access requirement. For example, the terminal may switch from a second beam direction to the first beam direction, and the terminal may be in a connected state in the second beam direction. After switching from the second beam direction to the first beam direction, the terminal may need to re-access a network, or may not need to disconnect from a network and then re-access the network. This is not limited in this application. For example, the network device may determine, based on a moving direction of the terminal, that the terminal switches to the first beam direction, and continue to provide a service for the terminal in the first beam direction. The terminal does not need to disconnect from the network and then re-access the network. For another example, that the terminal needs to re-access the network after switching from the second beam direction to the first beam direction specifically includes: The terminal sends a request message, to request the network device to schedule an SSB, and receives the SSB, to access the network.

In this application, the first beam direction may be understood as a direction of a transmit beam of the network device. If the network device receives the request message in the direction and/or determines that a terminal switches to the direction, it indicates that the terminal in the direction has an access requirement, and the network device may send the SSB based on the transmit beam in the direction.

In the foregoing technical solutions, the network device first sends the detection signal to collect the access requirement, that is, determines the beam direction in which the terminal having a network access requirement is located, and then sends the SSB in the beam direction for terminal access. In this way, for an area having no access requirement, there is no need to send the SSB and a SIB corresponding to the SSB, thereby saving resources and reducing a waste of resources. In addition, for the area having no access requirement, because the detection signal is sent and is used to detect only the terminal having an access requirement, the SSB for terminal access is sent only when the request message of the terminal is received and/or it is determined that a terminal switches to the first beam direction. Compared with directly sending the SSB in the area having no access requirement, sending the detection signal reduces power consumption of the network device.

With reference to the first aspect, in some possible implementations of the first aspect, the sending the detection signal includes: periodically sending detection signals in a plurality of beam directions.

The network device may periodically send the detection signals in the plurality of beam directions, to detect a beam direction or beam directions in which the terminal has an access requirement.

With reference to the first aspect, in some possible implementations of the first aspect, transmission periods of the detection signals corresponding to at least two areas are different from each other, the at least two areas are at least two of a plurality of areas covered by the plurality of beam directions, and the transmission period is a time interval between two transmissions of a detection signal in a same beam direction.

The transmission periods of the detection signals corresponding to the at least two of the plurality of areas covered by the plurality of beam directions are different. For example, transmission periods of the detection signals corresponding to all of the plurality of areas covered by the plurality of beam directions are different from each other.

The first beam direction and the second beam direction may be any two of the plurality of beam directions. This is not limited in this application.

In a possible design, division into the plurality of areas may be performed based on access requirements. For example, a transmission period of the detection signal corresponding to an area with a larger access requirement is shorter, and a transmission period of the detection signal corresponding to an area with a smaller access requirement is longer. In other words, for the area with a smaller access requirement, a time interval between two transmissions of a detection signal in a same beam direction by the network device is longer. This helps save resources, reduce a waste of resources, and improve resource utilization. In this application, for example, the access requirement may be predicted based on population density. For example, an area with higher population density has a larger potential access requirement, and an area with lower population density has a smaller potential access requirement.

With reference to the first aspect, in some possible implementations of the first aspect, the detection signals sent in the plurality of beam directions is a detection signal in one sweeping period, or that the network device sends the detection signal once in each of the plurality of beam directions represents one sweeping period, and the network device may periodically send the detection signals in the plurality of beam directions based on the transmission period. For example, if a total quantity of the beam directions in which the network device provides the service is X, a quantity of beam directions used to send the SSB is Y, a remaining beam direction is used to send the detection signal, and residence time of the detection signal in one beam direction is T, the sweeping period of the detection signal is equal to (X-Y)*T.

According to a second aspect, this application provides a signal transmission method. The method may be performed by a communication apparatus. The communication apparatus may be a terminal, or may be a component (for example, a chip or a chip system) configured in the terminal, or may be a logic module or software that can implement all or some functions of the terminal. This is not limited in this application.

The method includes: receiving a detection signal, where the detection signal is used to detect a terminal having an access requirement; sending a request message in a first beam direction and/or switching to the first beam direction, where the request message is used to request scheduling of an SSB; and receiving the SSB in the first beam direction.

In this application, that the terminal switches to the first beam direction indicates that there is an access requirement in the first beam direction. In other words, the terminal has a network access requirement in the first beam direction. For example, the terminal may switch from a second beam direction to the first beam direction, and the terminal may be in a connected state in the second beam direction. After switching from the second beam direction to the first beam direction, the terminal may need to re-access a network, or may not need to disconnect from a network and then re-access the network. This is not limited in this application. For example, a network device may determine, based on a moving direction of the terminal, that the terminal switches to the first beam direction, and continue to provide a service for the terminal in the first beam direction. The terminal does not need to disconnect from the network and then re-access the network. For another example, that the terminal needs to re-access the network after switching from the second beam direction to the first beam direction specifically includes: The terminal sends a request message, to request the network device to schedule an SSB, and receives the SSB, to access the network.

In this application, the first beam direction may be understood as a direction of a transmit beam of the network device. If the terminal sends the request message in the direction and/or switches to the direction, it indicates that the terminal in the direction has an access requirement, and the network device may send the SSB based on the transmit beam in the direction, and correspondingly, the terminal receives the SSB based on a receive beam in the direction. That the terminal sends the request message in the first beam direction may be understood as that the terminal sends the request message based on the transmit beam in the direction, and that the terminal receives the SSB in the first beam direction may be understood as that the terminal receives the SSB based on the receive beam in the direction.

In the foregoing technical solution, the terminal receives the detection signal. If having the access requirement, the terminal may send the request message in the first beam direction (the terminal may be located in the first beam direction), and/or if the terminal switches to the first beam direction, it is considered by default that the terminal has the access requirement in the first beam direction, so that the terminal can receive the SSB scheduled by the network device for terminal access. In this way, for an area having no access requirement, the network device does not need to send the SSB and a SIB corresponding to the SSB, thereby saving resources, and reducing a waste of resources.

With reference to the second aspect, in some possible implementations of the second aspect, transmission periods of the detection signal corresponding to at least two areas are different from each other, the at least two areas are at least two of a plurality of areas covered by the plurality of beam directions, the transmission period is a time interval between two transmissions of a detection signal in a same beam direction, and the plurality of beam directions are beam directions in which the network device provides a service.

The transmission periods of the detection signal corresponding to the at least two of the plurality of areas covered by the plurality of beam directions are different from each other. For example, transmission periods of the detection signals corresponding to all of the plurality of areas covered by the plurality of beam directions are different from each other.

In a possible design, division into the plurality of areas may be performed based on access requirements. For example, a transmission period of the detection signal corresponding to an area with a larger access requirement is shorter, and a transmission period of the detection signal corresponding to an area with a smaller access requirement is longer. In other words, for the area with a smaller access requirement, a time interval between two transmissions of a detection signal in a same beam direction by the network device is longer. This helps save resources, reduce a waste of resources, and improve resource utilization. In this application, for example, the access requirement may be predicted based on population density. For example, an area with higher population density has a larger potential access requirement, and an area with lower population density has a smaller potential access requirement.

With reference to the first aspect and the second aspect, in some possible implementations, the detection signal includes first information and at least one of a PSS or an SSS, and the first information is used to determine a timing advance (timing advance, TA).

In a possible design, the detection signal includes the PSS and the first information. Compared with the SSB, the detection signal does not need to carry a MIB transmitted on the SSS and a PBCH.

In another possible design, the detection signal includes the SSS and the first information. Compared with the SSB, the detection signal does not need to carry a MIB transmitted on the PSS and a PBCH.

In still another possible design, the detection signal includes the PSS, the SSS, and the first information. Compared with the SSB, the detection signal does not need to carry a MIB transmitted on a PBCH.

It can be learned that, compared with the SSB, the detection signal is designed to carry less content. This simplifies a design of the SSB, helps reduce signaling overheads, and saves resources.

With reference to the first aspect and the second aspect, in some possible implementations, the first information includes a common timing advance and/or a position of a satellite.

With reference to the first aspect and the second aspect, in some possible implementations, the detection signal includes the PSS and the first information, a time domain resource occupied by the first information is located after a time domain resource occupied by the PSS, a central position of frequency domain resources occupied by the first information is the same as a central position of frequency domain resources occupied by the PSS, and a size of the frequency domain resources occupied by the first information is greater than or equal to a size of the frequency domain resources occupied by the PSS.

With reference to the first aspect and the second aspect, in some possible implementations, the detection signal includes the SSS and the first information, time domain resources occupied by the first information are consecutive, a start position of the time domain resources occupied by the first information is located before a time domain resource occupied by the SSS, an end position of the time domain resources occupied by the first information is located after the time domain resource occupied by the SSS, a central position of frequency domain resources occupied by the first information is the same as a central position of frequency domain resources occupied by the SSS, and a size of the frequency domain resources occupied by the first information is greater than or equal to a size of the frequency domain resources occupied by the SSS.

With reference to the first aspect and the second aspect, in some possible implementations, the detection signal includes the PSS, the SSS, and the first information, a start position of a time domain resource occupied by the first information is located after a time domain resource occupied by the PSS and before a time domain resource occupied by the SSS, an end position of the time domain resource occupied by the first information is located after the time domain resource occupied by the SSS, a central position of frequency domain resources occupied by the first information is the same as a central position of frequency domain resources occupied by the PSS or the SSS, and a size of the frequency domain resources occupied by the first information is greater than or equal to a size of the frequency domain resources occupied by the PSS or the SSS.

With reference to the first aspect and the second aspect, in some possible implementations, a start position of the detection signal is an initial symbol in a subframe or a slot.

In other words, transmission of the detection signal starts from the initial symbol in the subframe or the slot, and there is no need to reserve some symbols. This helps save time domain resources and reduce a waste of time domain resources.

According to a third aspect, this application provides a communication apparatus, to implement the method according to the first aspect and any one of the possible implementations of the first aspect or the method according to the second aspect and any one of the possible implementations of the second aspect. The apparatus includes a corresponding module configured to perform the foregoing method. The module included in the apparatus may be implemented by software and/or hardware.

According to a fourth aspect, this application provides a communication apparatus. The apparatus includes a processor. The processor may be configured to execute a computer program in a memory, to implement the method according to the first aspect and any one of the possible implementations of the first aspect or the method according to the second aspect and any one of the possible implementations of the second aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, a pin, or a communication interface of another type.

Optionally, the apparatus further includes the memory, and the processor is coupled to the memory. The memory is configured to store program instructions and data. The memory is coupled to the processor. When the processor executes the instructions stored in the memory, the methods according to the foregoing aspects may be implemented.

According to a fifth aspect, this application provides a computer-readable storage medium. The computer-readable storage medium stores a computer program or instructions. When the computer program or the instructions are executed, the method according to the first aspect and any one of the possible implementations of the first aspect is implemented, or the method according to the second aspect and any one of the possible implementations of the second aspect is implemented.

According to a sixth aspect, this application provides a computer program product. The computer program product includes instructions. When the instructions are run, the method according to the first aspect and any one of the possible implementations of the first aspect is implemented, or the method according to the second aspect and any one of the possible implementations of the second aspect is implemented.

According to a seventh aspect, this application provides a chip system. The chip system includes at least one processor, configured to support implementation of a function according to the first aspect and any one of the possible implementations of the first aspect, or configured to support implementation of a function according to the second aspect and any one of the possible implementations of the second aspect, for example, receiving or processing data in the foregoing method.

In a possible design, the chip system further includes a memory, the memory is configured to store program instructions and data, and the memory is located inside or outside the processor.

In a possible design, the chip system further includes an interface circuit and/or a power supply circuit. The interface circuit is configured to transmit data, and the power supply circuit is configured to supply power to the chip system.

The chip system may include a chip, or may include a chip and another discrete component.

According to an eighth aspect, this application provides a communication system. The communication system includes a terminal and a network device, where the network device is configured to implement the method according to the first aspect and any one of the possible implementations of the first aspect, and the terminal is configured to implement the method according to the second aspect and any one of the possible implementations of the second aspect.

It should be understood that technical solutions of the third aspect to the eighth aspect of this application correspond to technical solutions of the first aspect and the second aspect of this application, and beneficial effects achieved by the aspects and corresponding feasible implementations are similar. Details are not described herein again.

### BRIEF DESCRIPTION OF DRAWINGS

FIG. 1 is a diagram of a format of a time-frequency resource used to transmit an SSB according to an embodiment of this application;
FIG. 2 is a diagram of a sweeping period and a transmission period of an SSB according to an embodiment of this application;
FIG. 3 is a diagram of an architecture of a communication system to which a signal transmission method according to this application is applicable;
FIG. 4 is a schematic flowchart of a signal transmission method according to an embodiment of this application;
FIG. 5 is a schematic flowchart of another signal transmission method according to an embodiment of this application;
FIG. 6a to FIG. 6f are diagrams of detection signals according to an embodiment of this application;
FIG. 7a to FIG. 7e are other diagrams of detection signals according to an embodiment of this application;
FIG. 8a to FIG. 8d are still other diagrams of detection signals according to an embodiment of this application;
FIG. 9 is a diagram of transmission periods of a detection signal corresponding to different areas according to an embodiment of this application;
FIG. 10 is a diagram of a distributed cell according to an embodiment of this application;
FIG. 11 is a block diagram of a communication apparatus according to an embodiment of this application;
FIG. 12 is another block diagram of a communication apparatus according to an embodiment of this application; and
FIG. 13 is still another diagram of a communication apparatus according to an embodiment of this application.

### DESCRIPTION OF EMBODIMENTS

The following describes technical solutions of this application with reference to the accompanying drawings.

For ease of understanding the technical solutions provided in this application, the following several points are first described.

First, in this application, terms "include", "having", and any other variant thereof are intended to cover non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to the apparatus, system, product, or device.

Second, in this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects, but does not exclude an "and" relationship between the associated objects. A specific indicated meaning may be understood with reference to the context. "At least one of the following items (pieces)" or a similar expression thereof indicates any combination of these items, and includes a singular item (piece) or any combination of a plurality of items (pieces). For example, at least one item (piece) of a, b, or c may indicate: a, b, c, a and b, a and c, b and c, or a, b, and c, where a, b, and c may be singular or plural.

Third, in this application, "sending" and "receiving" indicate signal transmission directions. For example, "sending information to a terminal" may be understood as that a destination of the information is the terminal, and may include direct sending through an air interface or indirect sending by another unit or module through an air interface. "Receiving information from a network device" may be understood as that a source of the information is the network device, and may include direct receiving from the network device through an air interface, or indirect receiving from the network device from another unit or module through an air interface. "Sending" may alternatively be understood as "output" of a chip interface, and "receiving" may alternatively be understood as "input" of the chip interface.

In other words, sending and receiving may be performed between devices, for example, between the network device and the terminal, or may be performed within a device. For example, sending or receiving is performed between components, modules, chips, software modules, or hardware modules in a device through a bus, a cable, or an interface.

Fourth, in this application, both "when" and "if" mean that an apparatus performs corresponding processing in an objective situation, but do not constitute a limitation on time, do not require that the apparatus has a determining action during implementation, and do not mean other limitations either.

Fifth, in this application, terms such as "example", "for example", "such as", or "like" are used to represent giving an example, an illustration, or a description. In this application, any embodiment or design scheme described with "example", "for example", "such as", or "like" should not be explained as being more preferred or having more advantages than another embodiment or design scheme. To be precise, use of the term, for example, "example", "for example", "such as", or "like", is intended to present a related concept in a specific manner.

For ease of understanding a method provided in this application, the following describes an SSB in detail.

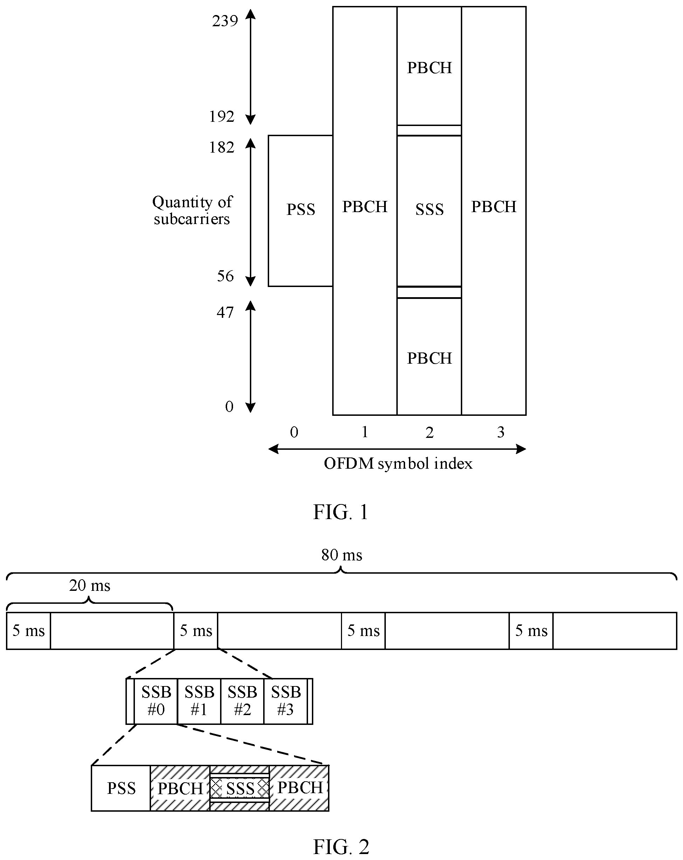

The SSB includes a PSS, an SSS, and a PBCH. A MIB is transmitted on the PBCH, the MIB is used to carry scheduling information of a SIB1, and the SIB1 may carry scheduling information of another type of SIB. With reference to FIG. 1, the following describes in detail a time-frequency resource used to transmit an SSB.

FIG. 1 is a diagram of a format of a time-frequency resource used to transmit an SSB according to an embodiment of this application.

As shown in FIG. 1, a time domain resource used to transmit the SSB is four orthogonal frequency division multiplexing (orthogonal frequency division multiplexing, OFDM) symbols (in this application, an OFDM symbol may be referred to as a symbol for short). An initial OFDM symbol is used to carry a PSS, and the PSS occupies 127 subcarriers in frequency domain. A 2^{nd} OFDM symbol and a 4^{th} OFDM symbol are used to carry a PBCH signal, and the PBCH signal occupies 240 subcarriers in the frequency domain. A 3^{rd} OFDM symbol is used to carry an SSS (the SSS occupies 127 subcarriers in the frequency domain) and some PBCH signals. (The PBCH signals at both ends each occupy 48 subcarriers in the frequency domain.)

It should be understood that the format of the time-frequency resource used to transmit the SSB shown in FIG. 1 is merely an example, and should not constitute any limitation on this application. For example, the SSB may occupy more or fewer subcarriers. This is not limited in this application.

The following describes in detail a sweeping period and a transmission period of an SSB with reference to FIG. 2.

FIG. 2 is a diagram of a sweeping period and a transmission period of an SSB according to an embodiment of this application.

The transmission period of the SSB is a time interval at which a network device sends the SSB twice in a same beam direction. As shown in FIG. 2, in an initial access process, the transmission period of the SSB may be 20 milliseconds (millisecond, ms) (four transmission periods are shown in the figure). That is, the time interval at which the network device sends the SSB twice in the same beam direction is 20 ms.

The sweeping period of the SSB is duration in which the network device separately sends the SSB once in a plurality of beam directions (the plurality of beam directions may be beam directions configured by the network device that are used to transmit the SSB). For example, as shown in FIG. 2, the network device may separately send the SSB in four beam directions (for example, a beam direction 1, a beam direction 2, a beam direction 3, and a beam direction 4). The SSB sent in the four beam directions are respectively identified by, for example, an SSB #0 to an SSB #3. A time length in which the network device sends the SSB in each of the four beam directions is 5 ms, that is, the sweeping period of the SSB is 5 ms.

In this application, a MIB is transmitted on a PBCH of the SSB, the MIB is used to carry scheduling information of a SIB1 and the like, and the SIB1 may carry scheduling information of another type of SIB. Therefore, it may be considered that the SSB corresponds to a SIB. For example, a terminal may determine a position of a control resource of the SIB1 based on the received MIB in the SSB, to search for the SIB1 on the corresponding control resource.

Currently, in an NTN, a network device sends an SSB and a SIB corresponding to the SSB in all beam directions for terminal access. The SIB may include parameters such as a common timing advance, a position of a satellite, a frequency range of a cell, and a configuration of the cell. Generally, there is no access requirement in areas corresponding to many beams. Consequently, sending an SSB and a corresponding SIB in the foregoing areas easily causes a waste of resources.

To resolve the foregoing problem, this application provides a signal transmission method. A network device first sends a detection signal to collect an access requirement, that is, determines a beam direction in which a terminal having a network access requirement is located, and then sends the SSB in the beam direction for terminal access. In this way, for an area having no access requirement, there is no need to send the SSB and a SIB corresponding to the SSB, thereby saving resources and reducing a waste of resources.

Before the signal transmission method provided in this application is described in detail, the following first describes in detail a communication system to which this application is applicable.

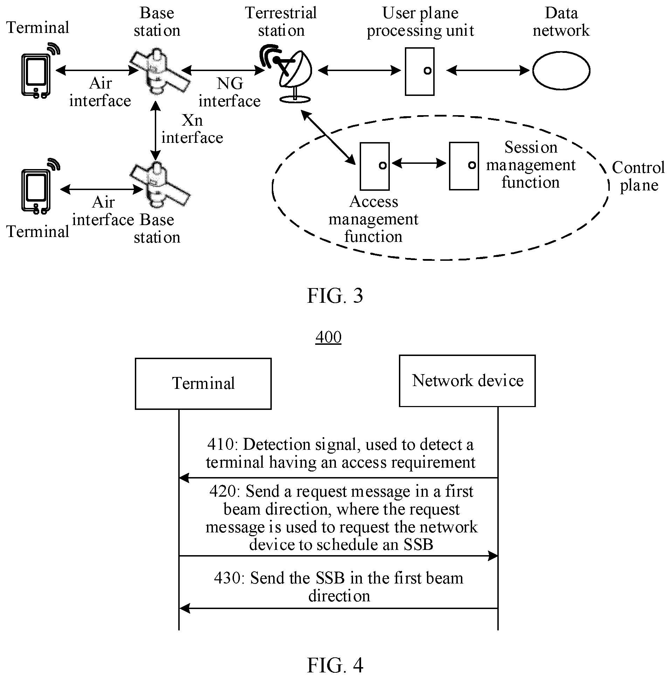

FIG. 3 is a diagram of an architecture of a communication system to which a signal transmission method according to this application is applicable.

As shown in FIG. 3, the signal transmission method provided in this application may be applied to an NTN communication system. The communication system includes a terminal, a satellite, a base station (an example of a network device), a terrestrial station, and a core network. In FIG. 3, an example in which the base station is deployed on the satellite is used. In actual application, the base station may be further deployed on a high-altitude platform. A deployment position of the base station is not limited in this application.

The terminal may access a network through an air interface (the air interface may be various types of air interfaces such as a 5G air interface). The base station or some base station functions are deployed on the high-altitude platform or the satellite, and the base station is connected to a terrestrial core network through a radio link. In addition, when the base station is deployed on the satellite, there is a radio link exists between satellites, to complete signaling exchange and user data transmission between base stations.

In this application, the satellite may be configured to forward a signal between the base station and the terminal.

The base station may provide a wireless access service, and schedule a radio resource for the terminal. The base station may be further configured to provide a reliable wireless transmission protocol, a reliable data encryption protocol, and the like.

The core network may be configured for user access control, mobility management, session management, user security authentication, charging, and the like. The core network may include a plurality of functional units, and may be classified into a control plane functional entity and a data plane functional entity. An access and mobility management function (access and mobility management function, AMF) is configured to be responsible for user access management, security authentication, and mobility management. A user plane function (user plane function, UPF) network element is configured to be responsible for managing user plane data transmission, traffic statistics collection, and the like.

The terrestrial station may be configured to forward signaling and service data between the base station and the core network.

In addition, in this application, the air interface is a radio link between a terminal device and the base station. An Xn interface is an interface between base stations, and is mainly used for signaling exchange, for example, handover. An NG interface is an interface between the base station and the core network, and is mainly configured to exchange non-access stratum (non-access stratum, NAS) signaling of the core network and service data of a user.

It should be understood that two terminals in the system shown in FIG. 3 are merely an example, and should not constitute any limitation on this application. In actual application, more terminals may be included. In addition, the base station is an example of the network device, and should not constitute any limitation on this application. In actual application, the network device may also be another type of device.

It should be further understood that a type of the network device and a type of the terminal are not limited in this application either. In this application, the network device may be any device having a wireless transceiver function. The network device includes, but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G (for example, NR) system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU). The network device may alternatively be a radio controller in a cloud radio access network (cloud radio access network, CRAN) scenario.

In this application, the terminal may also be referred to as a terminal device, user equipment (user equipment, UE), a mobile station, a mobile terminal, or the like. The terminal may include but is not limited to: a mobile phone (mobile phone), a tablet computer (pad), a computer having a wireless transceiver function, a virtual reality (virtual reality, VR) device, an augmented reality (augmented reality, AR) device, a hybrid reality (mixed reality, MR) device, an extended reality (extended reality, XR) device, a wireless terminal in industrial control (industrial control), a vehicle-mounted device, a wireless terminal in self driving, a wireless terminal in remote medical (remote medical), a wireless terminal in smart grid (smart grid), a wireless terminal in transportation safety (transportation safety), a wireless terminal in smart city (smart city), a wireless terminal in smart home (smart home), a wearable device, a video player, a full-series projector, and the like. A specific form of the terminal is not limited in this application.

The following describes in detail a signal transmission method provided in this application with reference to the accompanying drawings.

FIG. 4 is a schematic flowchart of a signal transmission method 400 according to an embodiment of this application. The method described by using interaction between a terminal and a network device in FIG. 4 is merely an example, and should not constitute any limitation on this application. The terminal in FIG. 4 may alternatively be replaced with a component (for example, a chip, a chip system, or a processor) configured in the terminal, or a logic module, software, or the like that can implement all or some functions of the terminal. The network device may be replaced with a component (for example, a chip, a chip system, or a processor) configured in the network device, or a logic module, software, or the like that can implement all or some functions of the network device. The network device may be, for example, the base station shown in FIG. 3.

The method 400 shown in FIG. 4 includes step 410 to step 430. The following describes in detail all steps in the method 400.

In step 410, the network device sends a detection signal, where the detection signal is used to detect a terminal having an access requirement. Correspondingly, the terminal receives the detection signal.

That the detection signal is used to detect the terminal having an access requirement may be understood as that the detection signal is used to detect a beam direction or beam directions in which the terminal has a network access requirement, or the detection signal is used to collect access requests in all beam directions, where the access request is a request for accessing a network.

For example, the network device may send the detection signal in a plurality of beam directions, to detect the terminal having an access requirement. The plurality of beam directions may be, for example, beam directions configured by the network device that are used to transmit the detection signal. Correspondingly, the terminal in the plurality of beam directions receives the detection signal. For example, a terminal in a first beam direction receives the detection signal, where the first beam direction is any one of the plurality of beam directions.

In step 420, the terminal sends a request message in the first beam direction, where the request message is used to request the network device to schedule an SSB. Correspondingly, the network device receives the request message in the first beam direction.

The first beam direction is any one of the plurality of beam directions, and the plurality of beam directions may be beam directions configured by the network device that are used to transmit the detection signal.

In this application, the first beam direction may be understood as a direction of a transmit beam of the network device. If the terminal sends the request message in the direction (or if the network device receives the request message in the direction), it indicates that the terminal in the direction has an access requirement. In this case, the network device may send the SSB based on the transmit beam in the direction, and correspondingly, the terminal receives the SSB based on a receive beam in the direction. That the terminal sends the request message in the first beam direction may be understood as that the terminal sends the request message based on the transmit beam in the direction.

The request message is used to request the network device to schedule the SSB, so that the terminal obtains a SIB based on the SSB scheduled by the network device, thereby accessing the network based on the SIB. In other words, the request message is used to request accessing the network.

For example, after receiving the detection signal, the terminal in the first beam direction may send the request message in the direction, to request the network device to schedule the SSB. Correspondingly, the network device receives the request message in the first beam direction. It may be understood that sending the request message by the terminal in the first beam direction (or receiving the request message by the network device in the first beam direction) is merely an example, and should not constitute any limitation on embodiments of this application. After receiving the detection signal, if a terminal in another beam direction among the plurality of beam directions has a network access requirement, the terminal may also send a request message, to request the network device to schedule an SSB.

It may be understood that a terminal in a beam direction having no access requirement does not need to send a request message. Correspondingly, if receiving no request message in a specific beam direction (for example, a third beam direction), the network device may continue to send the detection signal, and correspondingly, a terminal receives the detection signal. For example, the network device may send the detection signal in the third beam direction, and correspondingly, the terminal receives the detection signal in the third beam direction. The network device may periodically send the detection signal in the third beam direction, that is, send the detection signal once in the third beam direction at intervals of a period of time.

It should be understood that, in this application, that the request message is used to request the network device to schedule the SSB is merely an example, and should not constitute any limitation on this application. This may be replaced with that the request message is used to request the network device to enable normal communication with the terminal, for example, request the network device to schedule the SSB, a broadcast message (for example, a SIB), or a random access resource.

In step 430, the network device sends the SSB in the first beam direction. Correspondingly, the terminal receives the SSB in the first beam direction.

For example, after receiving the request message in the first beam direction, the network device sends the SSB in the first beam direction. Correspondingly, the terminal receives the SSB from the network device, to access the network.

It may be understood that the network device may periodically send the SSB in the first beam direction. For example, the network device sends the SSB based on a transmission period of the SSB.

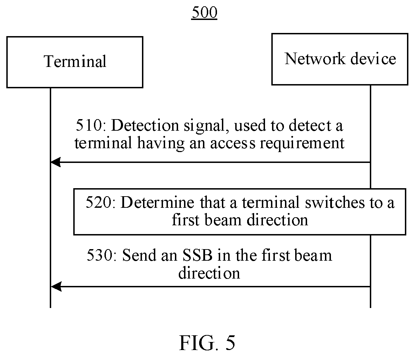

FIG. 5 is a schematic flowchart of another signal transmission method 500 according to an embodiment of this application. FIG. 5 describes the method only by using interaction between a terminal and a network device as an example, and should not constitute any limitation on this application. The terminal in FIG. 5 may alternatively be replaced with a component (for example, a chip, a chip system, or a processor) configured in the terminal, or a logic module, software, or the like that can implement all or some functions of the terminal. The network device may be replaced with a component (for example, a chip, a chip system, or a processor) configured in the network device, or a logic module, software, or the like that can implement all or some functions of the network device. The network device may be, for example, the base station shown in FIG. 3.

The method 500 shown in FIG. 5 includes step 510 to step 530. The following describes in detail all steps in the method 500.

In step 510, the network device sends a detection signal, where the detection signal is used to detect a terminal having an access requirement. Correspondingly, the terminal receives the detection signal.

For detailed descriptions of step 510, refer to step 410. Details are not described herein again.

In step 520, the network device determines that a terminal switches to a first beam direction. Correspondingly, the terminal switches to the first beam direction.

The first beam direction is any one of a plurality of beam directions. The plurality of beam directions may be beam directions configured by the network device that are used to transmit the detection signal.

The first beam direction may be understood as a direction of a transmit beam of the network device. If the terminal switches to the first beam direction, it indicates that the terminal in the direction has an access requirement. The network device may send an SSB based on the transmit beam in the direction, and correspondingly, the terminal receives the SSB based on a receive beam in the direction.

In this application, that the network device determines that a terminal switches to the first beam direction indicates that there is an access requirement in the first beam direction. In other words, the terminal in the first beam direction has a network access requirement. For example, the terminal may switch from a second beam direction to the first beam direction, and the terminal may be in a connected state in the second beam direction. After switching from the second beam direction to the first beam direction, the terminal may need to re-access a network, or may not need to disconnect from a network and then re-access the network. This is not limited in this application. The second beam direction is any one of the plurality of beam directions.

For example, the network device may determine, based on a moving direction of the terminal, that the terminal switches to the first beam direction, and continue to provide a service for the terminal in the first beam direction. The terminal does not need to disconnect from the network and then re-access the network. For another example, that the terminal needs to re-access the network after switching from the second beam direction to the first beam direction specifically includes: The terminal sends a request message, to request the network device to schedule an SSB, and receives the SSB, to access the network.

For example, after sending the detection signal, the network device determines that a terminal switches to the first beam direction. For example, if a terminal switches from the second beam direction to the first beam direction, the network device determines that the terminal has an access requirement in the first beam direction. That is, the network device may send the SSB in the first beam direction.

In step 530, the network device sends the SSB in the first beam direction. Correspondingly, the terminal receives the SSB in the first beam direction.

For example, after determining that a terminal switches to the first beam direction, the network device sends the SSB in the first beam direction. Correspondingly, the terminal receives the SSB from the network device.

It may be understood that if the network device determines that no terminal switches to the first beam direction, the network device continues to send the detection signal. For example, the network device may periodically send the detection signal in the first beam direction.

It should be understood that the embodiments shown in FIG. 4 and FIG. 5 may be used separately, or may be used in combination. When the embodiments shown in FIG. 4 and FIG. 5 are used in combination, in a possible design, after the network device sends the detection signal, if the terminal switches to the first beam direction (or the network device determines that a terminal switches to the first beam direction), the terminal sends the request message in the first beam direction (or the network device receives the request message in the first beam direction), the network device may send the SSB in the first beam direction. For example, the terminal switches from the second beam direction to the first beam direction, and the terminal may be in a connected state in the second beam direction. After switching to the first beam direction, the terminal needs to re-access the network. In this case, after switching to the first beam direction, the terminal may send the request message to the network device, to request scheduling of the SSB. Further, the terminal receives the SSB from the network device, to complete a network access process.

When the embodiments shown in FIG. 4 and FIG. 5 are used in combination, if the terminal does not switch to the first beam direction (or the network device determines that no terminal switches to the first beam direction), or a terminal does not send the request message in the first beam direction (or the network device receives no request message in the first beam direction), the network device continues to send the detection signal in the first beam direction, and correspondingly, the terminal continues to receive the detection signal in the first beam direction. The network device may periodically send the detection signal in the first beam direction, that is, send the detection signal once in the first beam direction at intervals of a period of time.

In another possible design, after the network device sends the detection signal, if the terminal switches to the first beam direction (or the network device determines that a terminal switches to the first beam direction), the network device may send the SSB in the first beam direction; or if the terminal sends the request message in the first beam direction (or the network device receives the request message in the first beam direction), the network device may send the SSB in the first beam direction. If the terminal does not switch to the first beam direction (or the network device determines that no terminal switches to the first beam direction), and the terminal does not send the request message in the first beam direction (or the network device receives no request message in the first beam direction), the network device may continue to send the detection signal in the first beam direction.

When the embodiment shown in FIG. 5 is used separately, FIG. 5 is applicable to a scenario in which a terminal does not need to disconnect from the network and then re-access the network after performing beam switching. For example, the terminal switches from the second beam direction to the first beam direction, and the terminal may be in a connected state in the second beam direction. After the terminal switches to the first beam direction, the network device may still provide a service for the terminal in the first beam direction, and the terminal does not need to disconnect from the network and then re-access the network. In this case, after determining that the terminal switches to the first beam direction, the network device may directly send the SSB, and does not need to receive the request message from the terminal.

The following describes in detail designs of the detection signal mentioned in the embodiments shown in FIG. 4 and FIG. 5.

Optionally, the detection signal includes first information and at least one of a PSS or an SSS, and the first information is used to determine a TA.

In an example, the detection signal includes the PSS, the SSS, and the first information. In another example, the detection signal includes the SSS and the first information. In still another example, the detection signal includes the PSS and the first information.

The PSS and/or the SSS may be used by the terminal to determine a start position for sending an uplink signal, and the first information may be used by the terminal to determine the TA, to ensure synchronization of the uplink signal.

Optionally, the first information includes a common timing advance and/or a position of a satellite. In this application, the position of the satellite may be an accurate position of the satellite, or may be a reference position of the satellite relative to a specific reference object, or may be a reference position that is at a distance from the accurate position of the satellite. This is not limited in this application. In addition, the position of the satellite may be indicated by using position coordinates, or may be indicated by using an ephemeris. This is not limited in this application.

When the detection signal includes the PSS, the SSS, and the first information, a start position of time domain resources occupied by the first information is located after a time domain resource occupied by the PSS and before a time domain resource occupied by the SSS, an end position of the time domain resources occupied by the first information is located after the time domain resource occupied by the SSS, a central position of frequency domain resources occupied by the first information is the same as a central position of frequency domain resources occupied by the PSS or a central position of frequency domain resources occupied by the SSS, and a size of the frequency domain resources occupied by the first information is greater than or equal to a size of the frequency domain resources occupied by the PSS or a size of the frequency domain resources occupied by the SSS.

For the time domain resources occupied by the first information, the time domain resources occupied by the first information are consecutive, the start position of the time domain resources occupied by the first information is located after a time domain resource occupied by the PSS and before a time domain resource occupied by the SSS, and the end position is located after the time domain resource occupied by the SSS. A size of the time domain resources occupied by the first information is not limited in this application. For example, the size of the time domain resources occupied by the first information may be the same as or different from a size of a time domain resource occupied by a PBCH in the SSB (for example, the size of the time domain resources occupied by the first information is greater than the size of the time domain resource occupied by the PBCH in the SSB).

For the frequency domain resources occupied by the first information, the central position of the frequency domain resources occupied by the first information is the same as the central position of the frequency domain resources occupied by the PSS. The size of the frequency domain resources occupied by the first information is not limited in this application. For example, the size of the frequency domain resources occupied by the first information may be the same as or different from the size of the frequency domain resources occupied by the PSS. For example, when the size of the frequency domain resources occupied by the first information is different from the size of the frequency domain resources occupied by the PSS, the size of the frequency domain resources occupied by the first information may be the same as size of frequency domain resources occupied by the PBCH in the SSB, the size of the frequency domain resources occupied by the first information is greater than the size of the frequency domain resources occupied by the PBCH in the SSB, or the size of the frequency domain resources occupied by the first information is less than the size of the frequency domain resources occupied by the PBCH in the SSB.

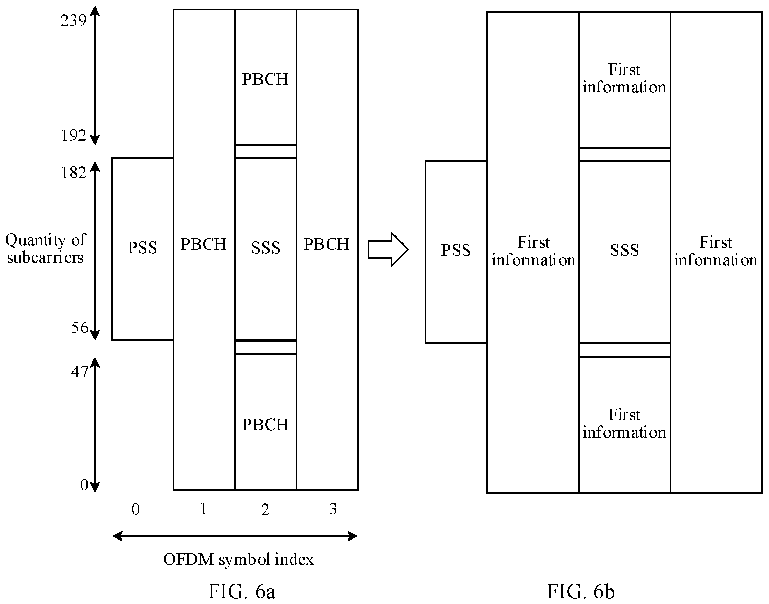

With reference to FIG. 6a to FIG. 6f, the following provides several possible designs of a time-frequency resource occupied by the first information when the detection signal includes the PSS, the SSS, and the first information.

FIG. 6a to FIG. 6f are diagrams of detection signals according to an embodiment of this application.

FIG. 6a shows time-frequency resources occupied by an SSB. For specific descriptions, refer to FIG. 1. Details are not described herein again.

As shown in FIG. 6b, relative positions of time-frequency resources occupied by first information in a detection signal are the same as relative positions of time-frequency resources occupied by a PBCH in the SSB, and a size of the time-frequency resources occupied by the first information in the detection signal is the same as a size of the time-frequency resources occupied by the PBCH in the SSB.

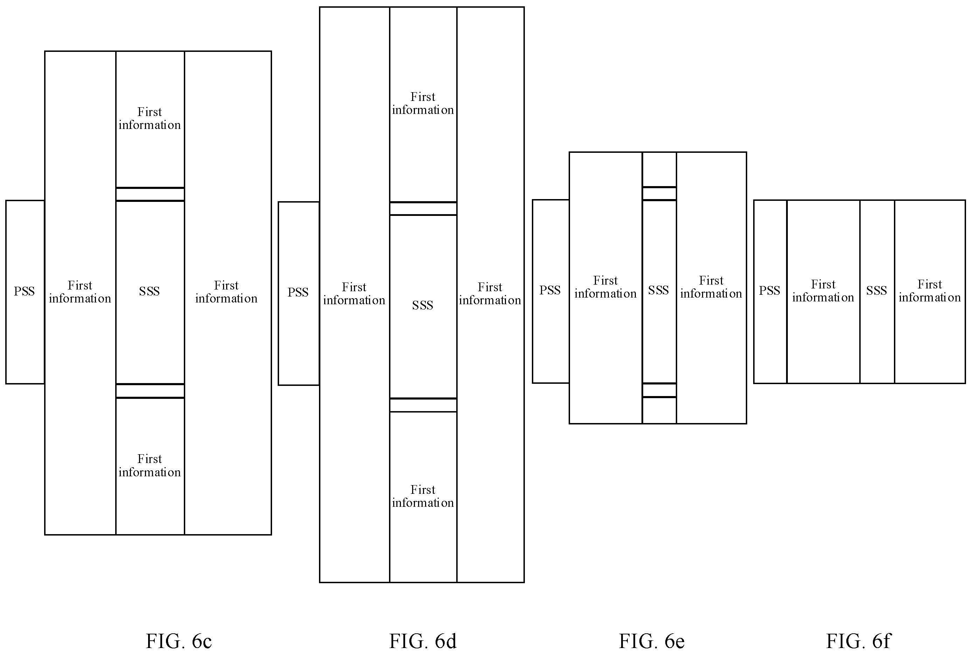

As shown in FIG. 6c, relative positions of time-frequency resources occupied by first information in a detection signal are the same as the relative positions of the time-frequency resources occupied by the PBCH in the SSB, a size of time domain resources occupied by the first information in the detection signal is greater than a size of time domain resources occupied by the PBCH in the SSB, and a size of frequency domain resources occupied by the first information in the detection signal is equal to a size of frequency domain resources occupied by the PBCH in the SSB.

As shown in FIG. 6d, relative positions of time-frequency resources occupied by first information in a detection signal are the same as the relative positions of the time-frequency resources occupied by the PBCH in the SSB, a size of time domain resources occupied by the first information in the detection signal is equal to the size of the time domain resources occupied by the PBCH in the SSB, and a size of frequency domain resources occupied by the first information in the detection signal is greater than the size of the frequency domain resources occupied by the PBCH in the SSB.

As shown in FIG. 6e, relative positions of time-frequency resources occupied by first information in a detection signal are the same as the relative positions of the time-frequency resources occupied by the PBCH in the SSB, a size of time domain resources occupied by the first information in the detection signal is equal to the size of the time domain resources occupied by the PBCH in the SSB, and a size of frequency domain resources occupied by the first information in the detection signal is less than the size of the frequency domain resources occupied by the PBCH in the SSB.

As shown in FIG. 6f, a start position of time domain resources occupied by first information in a detection signal is after a PSS and before an SSS, an end position of the time domain resources occupied by the first information is after the SSS, a central position of frequency domain resources occupied by the first information is the same as a central position of frequency domain resources occupied by the PSS, and a size of the frequency domain resources occupied by the first information is equal to a size of the frequency domain resources occupied by the PSS. When the detection signal includes the PSS and the first information, a time domain resource occupied by the first information is located after a time domain resource occupied by the PSS, a central position of frequency domain resources occupied by the first information is the same as a central position of frequency domain resources occupied by the PSS, and a size of the frequency domain resources occupied by the first information is greater than or equal to a size of the frequency domain resources occupied by the PSS.

For the time domain resource occupied by the first information, the time domain resource occupied by the first information is located after the time domain resource occupied by the PSS. A size of the time domain resource occupied by the first information is not limited in this application. For example, the size of the time domain resource occupied by the first information may be the same as or different from a size of time domain resources occupied by the SSS and a PBCH in the SSB. For example, the size of the time domain resource occupied by the first information is greater than the size of the time domain resources occupied by the SSS and the PBCH in the SSB.

For the frequency domain resources occupied by the first information, the central position of the frequency domain resources occupied by the first information is the same as the central position of the frequency domain resources occupied by the PSS. The size of the frequency domain resources occupied by the first information is not limited in this application. For example, the size of the frequency domain resources occupied by the first information may be the same as or different from the size of the frequency domain resources occupied by the PSS. For example, the size of the frequency domain resources occupied by the first information may be greater than the size of the frequency domain resources occupied by the PSS.

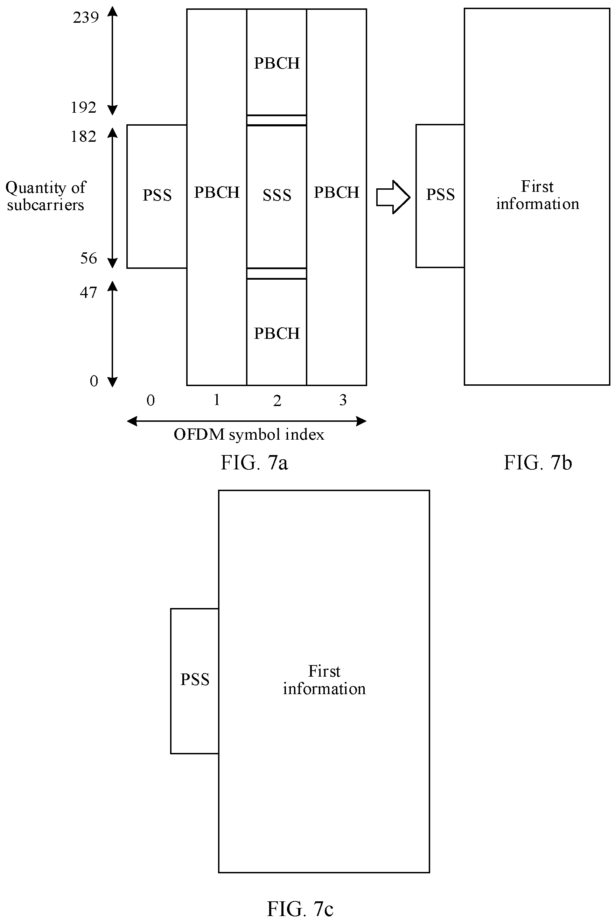

With reference to FIG. 7a to FIG. 7e, the following provides several possible designs of a time-frequency resource occupied by the first information when the detection signal includes the PSS and the first information.

FIG. 7a to FIG. 7e are other diagrams of detection signals according to an embodiment of this application.

FIG. 7a shows time-frequency resources occupied by an SSB. For specific descriptions, refer to FIG. 1. Details are not described herein again.

As shown in FIG. 7b, relative positions of time-frequency resources occupied by first information in a detection signal are the same as relative positions of time-frequency resources occupied by an SSS and a PBCH in the SSB, and a size of the time-frequency resources occupied by the first information in the detection signal is the same as a size of the time-frequency resources occupied by the SSS and the PBCH in the SSB.

As shown in FIG. 7c, relative positions of time-frequency resources occupied by first information in a detection signal are the same as the relative positions of the time-frequency resources occupied by the SSS and the PBCH in the SSB, a size of time domain resources occupied by the first information in the detection signal is greater than a size of time domain resources occupied by the SSS and the PBCH in the SSB (an example in which the size of the time domain resources occupied by the first information in the detection signal is greater than a size of a time domain resource occupied by a PSS in the detection signal), and a size of frequency domain resources occupied by the first information in the detection signal is equal to a size of frequency domain resources occupied by the SSS and the PBCH in the SSB (an example in which the size of the frequency domain resources occupied by the first information in the detection signal is greater than a size of frequency domain resources occupied by the PSS in the detection signal).

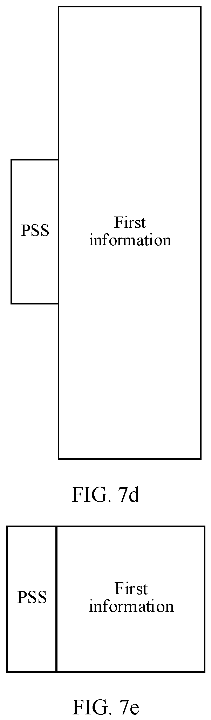

As shown in FIG. 7d, relative positions of time-frequency resources occupied by first information in a detection signal are the same as the relative positions of the time-frequency resources occupied by the SSS and the PBCH in the SSB, a size of time domain resources occupied by the first information in the detection signal is equal to the size of the time domain resources occupied by the SSS and the PBCH in the SSB, and a size of frequency domain resources occupied by the first information in the detection signal is greater than a size of frequency domain resources occupied by the SSS and the PBCH in the SSB.

As shown in FIG. 7e, time domain resources occupied by first information are located after a time domain resource occupied by a PSS, a central position of frequency domain resources occupied by the first information is the same as a central position of frequency domain resources occupied by the PSS, and a size of the frequency domain resources occupied by the first information in the detection signal is greater than or equal to a size of the frequency domain resources occupied by the PSS.

When the detection signal includes the SSS and the first information, time domain resources occupied by the first information are consecutive, a start position of the time domain resources occupied by the first information is located before a time domain resource occupied by the SSS, an end position of the time domain resources occupied by the first information is located after the time domain resource occupied by the SSS, a central position of frequency domain resources occupied by the first information is the same as a central position of frequency domain resources occupied by the SSS, and a size of the frequency domain resources occupied by the first information is greater than or equal to a size of the frequency domain resources occupied by the SSS.

For the time domain resources occupied by the first information, the time domain resources occupied by the first information are consecutive, the start position of the time domain resources occupied by the first information is located before the time domain resource occupied by the SSS, and the end position of the time domain resources occupied by the first information is located after the time domain resource occupied by the SSS. A size of the time domain resources occupied by the first information is not limited in this application. For example, the size of the time domain resources occupied by the first information may be the same as or different from a size of time domain resources occupied by the PSS and a PBCH in the SSB. For example, the size of the time domain resources occupied by the first information is greater than the size of the time domain resources occupied by the PSS and the PBCH in the SSB.

For the frequency domain resources occupied by the first information, the central position of the frequency domain resources occupied by the first information may be the same as the central position of the frequency domain resources occupied by the SSS. The size of the frequency domain resources occupied by the first information is not limited in this application. For example, the size of the frequency domain resources occupied by the first information may be the same as or different from the size of the frequency domain resources occupied by the SSS. For example, when the size of the frequency domain resources occupied by the first information is different from the size of the frequency domain resources occupied by the SSS, the size of the frequency domain resources occupied by the first information is the same as a size of frequency domain resources occupied by the PBCH in the SSB, the size of the frequency domain resources occupied by the first information is greater than the size of the frequency domain resources occupied by the PBCH in the SSB, or the size of the frequency domain resources occupied by the first information is less than the size of the frequency domain resources occupied by the PBCH in the SSB.

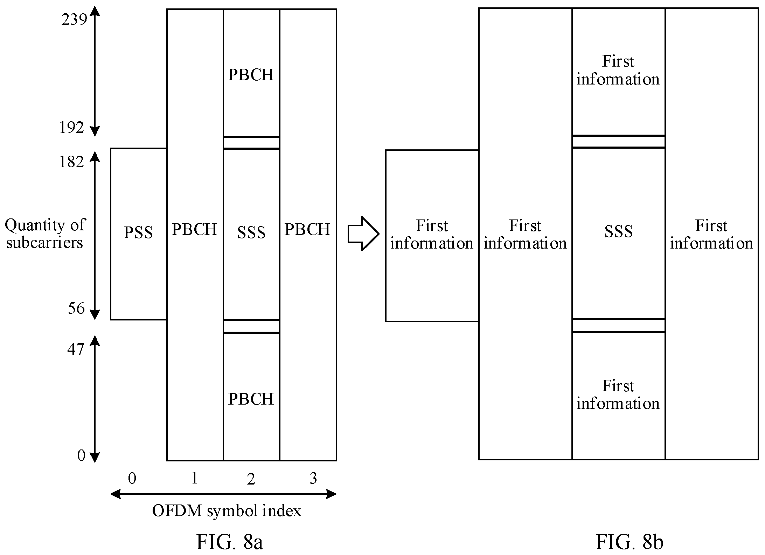

With reference to FIG. 8a to FIG. 8d, the following provides several possible designs of a time-frequency resource occupied by the first information when the detection signal includes the SSS and the first information.

FIG. 8a to FIG. 8d are still other diagrams of detection signals according to an embodiment of this application.

FIG. 8a shows time-frequency resources occupied by an SSB. For specific descriptions, refer to FIG. 1. Details are not described herein again.

As shown in FIG. 8b, relative positions of time-frequency resources occupied by first information in a detection signal are the same as relative positions of time-frequency resources occupied by a PSS and a PBCH in the SSB, and a size of the time-frequency resources occupied by the first information in the detection signal is the same as a size of the time-frequency resources occupied by the PSS and the PBCH in the SSB.

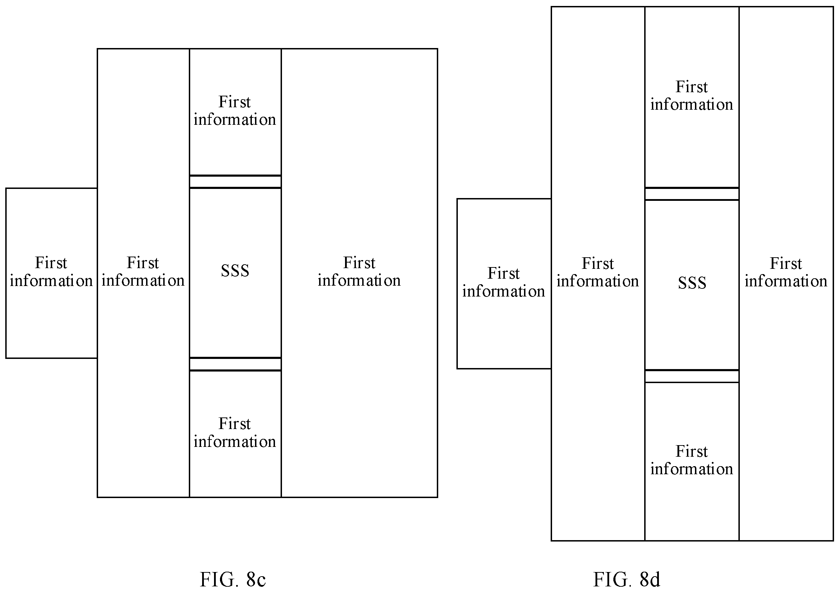

As shown in FIG. 8c, relative positions of time-frequency resources occupied by first information in a detection signal are the same as the relative positions of the time-frequency resources occupied by the PSS and the PBCH in the SSB, a size of time domain resources occupied by the first information in the detection signal is greater than a size of time domain resources occupied by the PSS and the PBCH in the SSB, and a size of frequency domain resources occupied by the first information in the detection signal is equal to a size of frequency domain resources occupied by the PBCH and the PSS in the SSB.

As shown in FIG. 8d, relative positions of time-frequency resources occupied by first information in a detection signal are the same as the relative positions of the time-frequency resources occupied by the PSS and the PBCH in the SSB, a size of time domain resources occupied by the first information in the detection signal is equal to the size of the time domain resources occupied by the PSS and the PBCH in the SSB, and a size of frequency domain resources occupied by the first information in the detection signal is greater than the size of frequency domain resources occupied by the PSS and the PBCH in the SSB.

It should be understood that the sizes of the time-frequency resources occupied by the first information in the detection signals shown in FIG. 6a to FIG. 6f, FIG. 7a to FIG. 7e, and FIG. 8a to FIG. 8d are merely examples, and should not constitute any limitation on this application. During actual application, the network device may adjust, based on a size of first information, a size of a time-frequency resource occupied by the first information in a detection signal.

Optionally, a start position of the detection signal is an initial symbol in a subframe or a slot. In other words, transmission of the detection signal starts from the initial symbol in the subframe or the slot, and there is no need to reserve some symbols.

The following describes in detail a transmission period and a sweeping period of the detection signal mentioned in the embodiments shown in FIG. 4 and FIG. 5.

Optionally, the network device may periodically send detection signals in the plurality of beam directions. Transmission periods of the detection signals corresponding to at least two areas are different from each other, the at least two areas are at least two of a plurality of areas covered by the plurality of beam directions, and the transmission period is a time interval between two transmissions of the detection signal in a same beam direction.

The network device may periodically send the detection signals in the plurality of beam directions, and the transmission periods of the detection signals corresponding to the at least two of the plurality of areas covered by the plurality of beam directions are different. For example, transmission periods of the detection signals corresponding to all of the plurality of areas covered by the plurality of beam directions are different from each other.

In a possible implementation, division into the plurality of areas may be performed based on access requirements. For example, a transmission period of the detection signal corresponding to an area with a larger access requirement is shorter, and a transmission period of the detection signal corresponding to an area with a smaller access requirement is longer. In other words, for the area with a smaller access requirement, a time interval between two transmissions of the detection signal in a same beam direction by the network device is longer. In this application, for example, the access requirement may be predicted based on population density. For example, an area with higher population density has a larger potential access requirement, and an area with lower population density has a smaller potential access requirement.

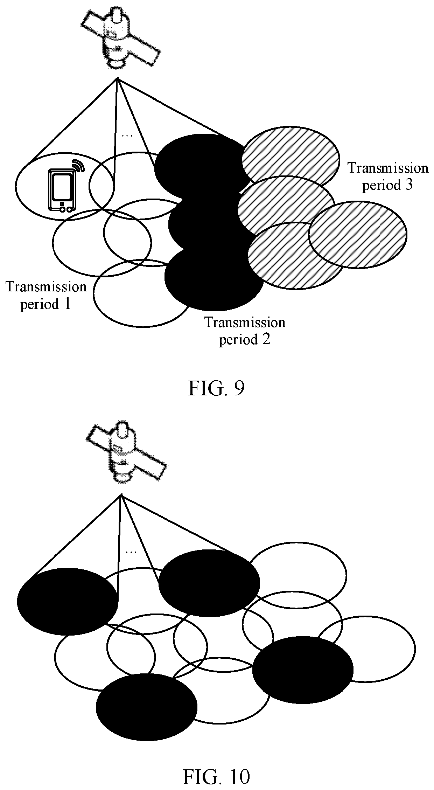

FIG. 9 is a diagram of transmission periods of a detection signal corresponding to different areas according to an embodiment of this application.

As shown in FIG. 9, three areas are used as an example. Division into the three areas are performed based on access requirements. For example, the three areas correspond to different access requirements, transmission periods of the detection signal corresponding to the three areas are respectively a transmission period 1, a transmission period 2, and a transmission period 3, and the transmission period 1, the transmission period 2, and the transmission period 3 are different from each other. For example, if an access requirement of a white area is greater than an access requirement of a black area, and the access requirement of the black area is greater than an access requirement of a stripe shadow area, the transmission period 1 is less than the transmission period 2, and the transmission period 2 is less than the transmission period 3.

Optionally, the detection signal sent in the plurality of beam directions is a detection signal in one sweeping period, or that a network device sends the detection signal once in each of the plurality of beam directions represents one sweeping period, and the network device may periodically send the detection signals in the plurality of beam directions.

For example, if a total quantity of the beam directions in which the network device provides a service is X, a quantity of beam directions used to send an SSB is Y, a remaining beam direction is used to send the detection signal, and residence time of the detection signal in one beam direction is T, the sweeping period of the detection signal is equal to (X-Y)*T. For example, if the total quantity of the beam directions in which the network device provides the service is 100, the quantity of beam directions used to send the SSB is 4, remaining beam directions (96 beam directions) are used to send the detection signal, and residence time of the detection signal in one beam direction is T, the sweeping period of the detection signal is equal to (100-4)*T=96*T.

As described above, for a beam direction having an access requirement (for example, a request message from a terminal is received in a first beam direction and/or it is determined that a terminal switches to the first beam direction), the network device may schedule an SSB. In this application, even if areas covered by beam directions in which SSBs are scheduled are not geographically connected, the areas may form a distributed cell, and broadcast messages and cell identifiers corresponding to all areas in the distributed cell are consistent.

FIG. 10 is a diagram of a distributed cell according to an embodiment of this application.

As shown in FIG. 10, black areas are areas covered by beam directions in which SSBs are scheduled, and are not geographically connected, but may form a distributed cell. Cell identifiers corresponding to the black areas are the same, and broadcast messages are also the same. For example, the SSBs and SIBs broadcast in the black areas are the same.

It may be understood that when a terminal moves in the distributed cell, for example, the terminal switches from a second beam direction in the distributed cell to a first beam direction, the terminal may directly receive an SSB from a network device. The terminal may be in a connected state in the second beam direction.

Based on the foregoing technical solutions, the network device first sends the detection signal to collect an access requirement, that is, determines a beam direction in which a terminal having a network access requirement is located, and then sends the SSB in the beam direction for terminal access. In this way, for an area having no access requirement, there is no need to send the SSB and a SIB corresponding to the SSB, thereby saving resources and reducing a waste of resources. In addition, for the area having no access requirement, because the detection signal is sent and is used to detect only the terminal having an access requirement, the SSB for terminal access is sent only when the request message of the terminal is received and/or it is determined that a terminal switches to the first beam direction. Compared with directly sending the SSB in the area having no access requirement, sending the detection signal reduces power consumption of the network device.

The following describes in detail the signal transmission method provided in embodiments of this application with reference to the accompanying drawings. The following describes in detail an apparatus provided in embodiments of this application with reference to the accompanying drawings.

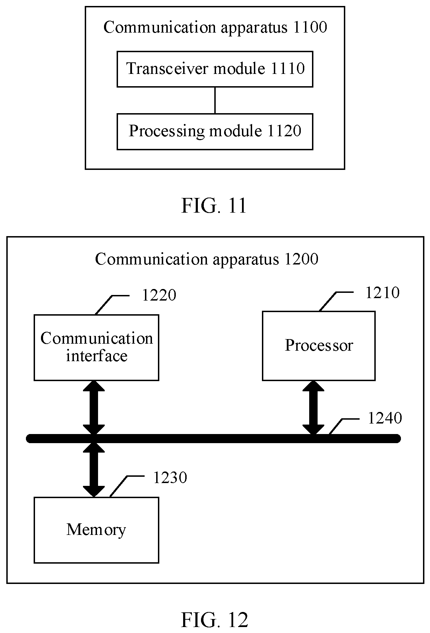

It should be understood that apparatuses shown in FIG. 11 to FIG. 13 may be configured to implement functions of the terminal or the network device in the foregoing method embodiments, and therefore can also implement beneficial effects of the foregoing method embodiments. In embodiments of this application, the apparatus may be the terminal in the method embodiment shown in FIG. 4 or FIG. 5, or may be a component (for example, a chip, a chip system, or a processor) configured in the terminal, or may be a logic module or software that can implement some or all functions of the terminal; or the apparatus may be the network device in the method embodiment shown in FIG. 4 or FIG. 5, or may be a component (for example, a chip, a chip system, or a processor) configured in the network device, or may be a logic module or software that can implement some or all functions of the network device.

FIG. 11 is a block diagram of a communication apparatus 1100 according to an embodiment of this application.

As shown in FIG. 11, the apparatus 1100 may include a transceiver module 1110 and a processing module 1120. The apparatus 1100 is configured to implement functions of the terminal or the network device in the method embodiment shown in FIG. 4 or FIG. 5.

When the apparatus 1100 is configured to implement the functions of the network device in the method embodiment shown in FIG. 4, the transceiver module 1110 may be configured to send a detection signal, where the detection signal is used to detect a terminal having an access requirement; the processing module 1120 may be configured to receive a request message in a first beam direction, where the request message is used to request scheduling of an SSB; and the transceiver module 1110 may be further configured to send the SSB in the first beam direction.

Optionally, the transceiver module 1110 is specifically configured to periodically send detection signals in a plurality of beam directions.

Optionally, transmission periods of the detection signal corresponding to at least two areas are different from each other, the at least two areas are at least two of a plurality of areas covered by the plurality of beam directions, and the transmission period is a time interval between two transmissions of the detection signal in a same beam direction.

When the apparatus 1100 is configured to implement the functions of the terminal in the method embodiment shown in FIG. 4, the transceiver module 1110 may be configured to receive a detection signal, where the detection signal is used to detect a terminal having an access requirement; the processing module 1120 may be configured to send a request message in a first beam direction, where the request message is used to request scheduling of an SSB; and the transceiver module 1110 may be further configured to receive the SSB in the first beam direction.

When the apparatus 1100 is configured to implement the functions of the network device in the method embodiment shown in FIG. 5, the transceiver module 1110 may be configured to send a detection signal, where the detection signal is used to detect a terminal having an access requirement; the processing module 1120 may be configured to determine that a terminal switches to a first beam direction; and the transceiver module 1110 may be further configured to send an SSB in the first beam direction.

When the apparatus 1100 is configured to implement the functions of the terminal in the method embodiment shown in FIG. 5, the transceiver module 1110 may be configured to receive a detection signal, where the detection signal is used to detect a terminal having an access requirement; the processing module 1120 may be configured to perform switching to a first beam direction; and the transceiver module 1110 may be further configured to receive an SSB in the first beam direction.

Optionally, transmission periods of the detection signal corresponding to at least two areas are different from each other, the at least two areas are at least two of a plurality of areas covered by a plurality of beam directions, the transmission period is a time interval between two transmissions of a detection signal in a same beam direction, and the plurality of beam directions are beam directions in which a network device provides a service.

Optionally, the detection signal includes first information and at least one of a PSS or an SSS, and the first information is used to determine a TA.

Optionally, the first information includes a common timing advance and/or a position of a satellite.

Optionally, the detection signal includes the PSS and the first information, a time domain resource occupied by the first information is located after a time domain resource occupied by the PSS, a central position of frequency domain resources occupied by the first information is the same as a central position of frequency domain resources occupied by the PSS, and a size of the frequency domain resources occupied by the first information is greater than or equal to a size of the frequency domain resources occupied by the PSS.

Optionally, the detection signal includes the SSS and the first information, time domain resources occupied by the first information are consecutive, a start position of the time domain resources occupied by the first information is located before a time domain resource occupied by the SSS, an end position of the time domain resources occupied by the first information is located after a time domain resource occupied by the time domain resource occupied by the SSS, a central position of frequency domain resources occupied by the first information is the same as a central position of frequency domain resources occupied by the SSS, and a size of the frequency domain resources occupied by the first information is greater than or equal to a size of the frequency domain resources occupied by the SSS.

Optionally, the detection signal includes the PSS, the SSS, and the first information, a start position of a time domain resource occupied by the first information is located after the time domain resource occupied by the PSS and before the SSS, an end position of the time domain resource occupied by the first information is located after a time domain resource occupied by the SSS, a central position of frequency domain resources occupied by the first information is the same as a central position of frequency domain resources occupied by the PSS or the SSS, and a size of the frequency domain resources occupied by the first information is greater than or equal to a size of the frequency domain resources occupied by the PSS or the SSS.

Optionally, a start position of the detection signal is an initial symbol in a subframe or a slot.

For more detailed descriptions of all modules, directly refer to related descriptions in the method embodiments shown in FIG. 4 and FIG. 5. Details are not described herein again.

It should be understood that, in embodiments of this application, module division is an example, and is merely logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 12 is another block diagram of a communication apparatus 1200 according to an embodiment of this application; and

The apparatus 1200 may be a chip system, or may be a device configured with the chip system, to implement the methods in the foregoing method embodiments. In embodiments of this application, the chip system may include a chip, or may include a chip and another discrete component.

As shown in FIG. 12, the apparatus 1200 may include a processor 1210. The processor 1210 may be configured to execute a computer program or instructions in a memory, to implement the steps performed by the terminal or the steps performed by the network device in the method embodiment shown in FIG. 4 or FIG. 5.

Optionally, the apparatus 1200 further includes a communication interface 1220. The communication interface 1220 may be configured to communicate with another device through a transmission medium, so that the apparatus 1200 can communicate with the another device. The communication interface 1220 may be, for example, a transceiver, an interface, a bus, a circuit, or an apparatus that can implement a transceiver function. The processor 1210 may input and output data through the communication interface 1220, and is configured to implement the method in the embodiment corresponding to FIG. 4 or FIG. 5. Specifically, the apparatus 1200 is configured to implement functions of the terminal or the network device in the foregoing method embodiment.

Optionally, the apparatus 1200 further includes at least one memory 1230, configured to store program instructions and/or data. The memory 1230 is coupled to the processor 1210. The coupling in embodiments of this application may be an indirect coupling or a communication connection between apparatuses, units, or modules in an electrical form, a mechanical form, or another form, and is used for information exchange between the apparatuses, the units, or the modules. The processor 1210 may cooperate with the memory 1230. The processor 1210 may execute the program instructions stored in the memory 1230.

In this application, the memory 1230 may be integrated into the processor 1210, or the processor 1210 and the memory 1230 may be arranged separately. This is not limited in this application.

It should be understood that the coupling in embodiments of this application may be an indirect coupling or a communication connection between apparatuses, units, or modules in an electrical form, a mechanical form, or another form, and is used for information exchange between the apparatuses, the units, or the modules. The processor 1210 may cooperate with the memory 1230. A specific connection medium between the processor 1210, the communication interface 1220, and the memory 1230 is not limited in embodiments of this application. In this embodiment of this application, in FIG. 12, the processor 1210, the communication interface 1220, and the memory 1230 are connected through a bus 1240. The bus 1240 is represented by using a bold line in FIG. 12, and a connection manner between other components is merely described as an example and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented through only one bold line in FIG. 12. However, it does not indicate that there is only one bus or only one type of bus.

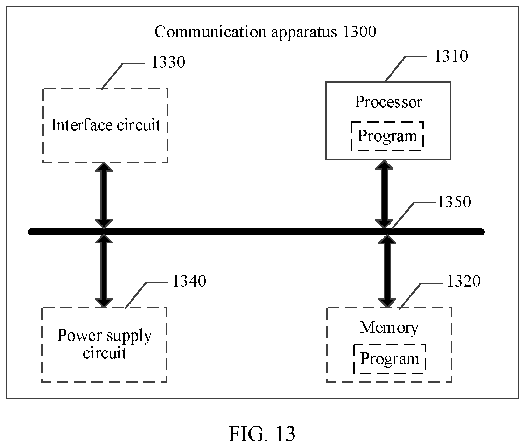

FIG. 13 is still another diagram of a communication apparatus 1300 according to an embodiment of this application.

As shown in FIG. 13, the communication apparatus 1300 includes at least one processor 1310. The at least one processor 1310 may be configured to execute a computer program or instructions in a memory, to implement the steps performed by the terminal or the steps performed by the network device in the embodiment shown in FIG. 4 or FIG. 5.

Optionally, the communication apparatus 1300 may further include at least one memory 1320, configured to store instructions that are executed by the processor 1310, store input data needed by the processor 1310 to run instructions, or store data generated after the processor 1310 runs instructions. The at least one processor 1310 and the at least one memory 1320 may be arranged separately. For example, each memory may be connected to one or more processors, so that the connected processors can read information from the memory, and store and/or write information into the memory. Alternatively, the at least one processor 1310 and the at least one memory 1320 may be integrated together. For example, one processor may be integrated with one or more memories.

Optionally, the communication apparatus 1300 further includes an interface circuit 1330, which may be configured for data and/or signaling transmission. The at least one processor 1310 and the interface circuit 1330 are coupled to each other. It may be understood that the interface circuit 1330 may be a transceiver, an input/output circuit, a bus, a module, a pin, or a communication interface of another type. In the input/output circuit, an input circuit may be configured to perform receiving, and an output interface may be configured to perform sending.

Optionally, the communication apparatus 1300 further includes a power supply circuit 1340, and the power supply circuit 1340 may be configured to supply power to the communication apparatus 1300.

When the communication apparatus 1300 is configured to implement the method shown in FIG. 4, the processor 1310 is configured to execute the functions of the processing module, and the interface circuit 1330 is configured to implement the functions of the transceiver module. Whether the interface circuit 1330 is configured to perform sending or receiving may be specifically determined based on whether the interface circuit is configured to perform a sending operation or a receiving operation in a solution performed by the communication apparatus 1300. For example, the interface circuit may be configured to perform step 410 in the method embodiment shown in FIG. 4.

It may be understood that, when the communication apparatus 1200 is a communication device, the interface circuit 1330 may be a transceiver, and may specifically include a transmitter and a receiver. The transmitter is configured to send a signal, and the receiver is configured to receive a signal. When the communication apparatus 1300 is a chip used in a communication device, the interface circuit 1330 may be an input/output circuit, a bus, a module, a pin, or a communication interface of another type. In the input/output circuit, an input circuit may be configured to perform receiving, and an output interface may be configured to perform sending.

It should be understood that in the communication apparatus 1300 shown in FIG. 13, the processor 1310 may correspond to the processing module 1120, and the interface circuit 1330 may correspond to the transceiver module 1110.

It should be further understood that the coupling in embodiments of this application may be an indirect coupling or a communication connection between apparatuses, units, or modules in an electrical form, a mechanical form, or another form, and is used for information exchange between the apparatuses, the units, or the modules. A specific connection medium between the at least one processor 1310, the at least one memory 1320, the interface circuit 1330, and the power supply circuit 1340 is not limited in embodiments of this application. In this embodiment of this application, in FIG. 13, the processor 1310, the memory 1320, the interface circuit 1330, and the power supply circuit 1340 are connected through a bus 1350. The bus 1350 is represented by using a bold line in FIG. 13, and a connection manner between other components is merely described as an example and is not limited thereto. The bus may be a PCI bus, an EISA bus, or the like. The bus may be classified into an address bus, a data bus, a control bus, and the like. For ease of representation, the bus is represented through only one bold line in FIG. 13. However, it does not indicate that there is only one bus or only one type of bus.

This application further provides a computer program product. The computer program product includes a computer program (which may also be referred to as code or instructions). When the computer program is run, the steps performed by the terminal or the steps performed by the network device in the method in the embodiment shown in FIG. 4 or FIG. 5 may be implemented.

This application further provides a computer-readable storage medium. The computer-readable storage medium stores a computer program (which may also be referred to as code or instructions). When the computer program is run, the steps performed by the terminal or the steps performed by the network device in the method in the embodiment shown in FIG. 4 or FIG. 5 may be implemented.

An embodiment of this application provides a communication system. The system includes the foregoing terminal and network device.

It should be understood that the processor in embodiments of this application may be an integrated circuit chip, and has a signal processing capability. In an implementation process, steps in the foregoing method embodiments can be implemented through a hardware integrated logic circuit in the processor, or through instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be further understood that the memory in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and the methods described in this specification includes but is not limited to these memories and any memory of another appropriate type.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that, illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented through software, hardware, firmware, or any combination thereof. When software is used to implement the foregoing embodiments, all or a part of the foregoing embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid-state disk (solid-state disk, SSD)), or the like.

When the function is implemented in the form of a software functional unit and sold or used as an independent product, the integrated unit may be stored in a computer-readable storage medium. Based on such an understanding, the technical solutions of this application essentially, or the part contributing to the technologies, or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
sending a detection signal, wherein the detection signal is used to detect a terminal having an access requirement;
receiving a request message in a first beam direction and/or determining that a terminal switches to the first beam direction, wherein the request message is used to request scheduling of a synchronization signal block SSB; and
sending the SSB in the first beam direction.

2. The method according to claim 1, wherein the detection signal comprises first information and at least one of a primary synchronization signal PSS or a secondary synchronization signal SSS, and the first information is used to determine a timing advance TA.

3. The method according to claim 2, wherein the first information comprises a common timing advance and/or a position of a satellite.

4. The method according to claim 2 or 3, wherein the detection signal comprises the PSS and the first information, a time domain resource occupied by the first information is located after a time domain resource occupied by the PSS, a central position of frequency domain resources occupied by the first information is the same as a central position of frequency domain resources occupied by the PSS, and a size of the frequency domain resources occupied by the first information is greater than or equal to a size of the frequency domain resources occupied by the PSS.

5. The method according to claim 2 or 3, wherein the detection signal comprises the SSS and the first information, time domain resources occupied by the first information are consecutive, a start position of the time domain resources occupied by the first information is located before a time domain resource occupied by the SSS, an end position of the time domain resources occupied by the first information is located after the time domain resource occupied by the SSS, a central position of frequency domain resources occupied by the first information is the same as a central position of frequency domain resources occupied by the SSS, and a size of the frequency domain resources occupied by the first information is greater than or equal to a size of the frequency domain resources occupied by the SSS.

6. The method according to claim 2 or 3, wherein the detection signal comprises the PSS, the SSS, and the first information, a start position of a time domain resource occupied by the first information is located after a time domain resource occupied by the PSS and before a time domain resource occupied by the SSS, an end position of the time domain resource occupied by the first information is located after the time domain resource occupied by the SSS, a central position of frequency domain resources occupied by the first information is the same as a central position of frequency domain resources occupied by the PSS or the SSS, and a size of the frequency domain resources occupied by the first information is greater than or equal to a size of the frequency domain resources occupied by the PSS or the SSS.

7. The method according to any one of claims 1 to 6, wherein a start position of the detection signal is an initial symbol in a subframe or a slot.

8. The method according to any one of claims 1 to 7, wherein the sending the detection signal comprises:
periodically sending detection signals in a plurality of beam directions.

9. The method according to claim 8, wherein transmission periods of the detection signals corresponding to at least two areas are different from each other, the at least two areas are at least two of a plurality of areas covered by the plurality of beam directions, and the transmission period is a time interval between two transmissions of a detection signal in a same beam direction.

10. A signal transmission method, comprising:
receiving a detection signal, wherein the detection signal is used to detect a terminal having an access requirement;
sending a request message in a first beam direction and/or switching to the first beam direction, wherein the request message is used to request scheduling of a synchronization signal block SSB; and
receiving the SSB in the first beam direction.

11. The method according to claim 10, wherein the detection signal comprises first information and at least one of a primary synchronization signal PSS or a secondary synchronization signal SSS, and the first information is used to determine a timing advance TA.

12. The method according to claim 11, wherein the first information comprises a common timing advance and/or a position of a satellite.

13. The method according to claim 11 or 12, wherein the detection signal comprises the PSS and the first information, a time domain resource occupied by the first information is located after a time domain resource occupied by the PSS, a central position of frequency domain resources occupied by the first information is the same as a central position of frequency domain resources occupied by the PSS, and a size of the frequency domain resources occupied by the first information is greater than or equal to a size of the frequency domain resources occupied by the PSS.

14. The method according to claim 11 or 12, wherein the detection signal comprises the SSS and the first information, time domain resources occupied by the first information are consecutive, a start position of the time domain resources occupied by the first information is located before a time domain resource occupied by the SSS, an end position of the time domain resources occupied by the first information is located after the time domain resource occupied by the SSS, a central position of frequency domain resources occupied by the first information is the same as a central position of frequency domain resources occupied by the SSS, and a size of the frequency domain resources occupied by the first information is greater than or equal to a size of the frequency domain resources occupied by the SSS.

15. The method according to claim 11 or 12, wherein the detection signal comprises the PSS, the SSS, and the first information, a start position of a time domain resource occupied by the first information is located after a time domain resource occupied by the PSS and before a time domain resource occupied by the SSS, an end position of the time domain resource occupied by the first information is located after the time domain resource occupied by the SSS, a central position of frequency domain resources occupied by the first information is the same as a central position of frequency domain resources occupied by the PSS or the SSS, and a size of the frequency domain resources occupied by the first information is greater than or equal to a size of the frequency domain resources occupied by the PSS or the SSS.

16. The method according to any one of claims 10 to 15, wherein a start position of the detection signal is an initial symbol in a subframe or a slot.

17. The method according to any one of claims 10 to 16, wherein transmission periods of the detection signal corresponding to at least two areas are different, the at least two areas are at least two of a plurality of areas covered by a plurality of beam directions, the transmission period is a time interval between two transmissions of a detection signal in a same beam direction, and the plurality of beam directions are beam directions in which a network device provides a service.

18. A communication apparatus, comprising a module configured to implement the method according to any one of claims 1 to 9, or a module configured to implement the method according to any one of claims 10 to 17.

19. A communication apparatus, comprising a processor and a memory, wherein
the memory is configured to store a computer program; and
the processor is configured to invoke the computer program, to cause the apparatus to implement the method according to any one of claims 1 to 9 or the method according to any one of claims 10 to 17.

20. A computer-readable storage medium, wherein the storage medium stores a computer program or instructions; and when the computer program or the instructions are executed by a computer, the method according to any one of claims 1 to 9 or the method according to any one of claims 10 to 17 is implemented.

21. A computer program product, wherein the computer program product comprises instructions; and when the instructions are run by a computer, the method according to any one of claims 1 to 9 or the method according to any one of claims 10 to 17 is implemented.
